# EUROPEAN PATENT SPECIFICATION

(11) **EP 3 464 878 B1**
(45) Date of publication and mention of the grant of the patent: **21.04.2021**
(21) Application number: 17723392.1
(22) Date of filing: 15.05.2017
(51) Int. Cl.: F03B 13/26, F16B 2/02

(54) **WATER CURRENT POWER GENERATION SYSTEMS**
WASSERSTRÖMUNGSTROMERZEUGUNGSSYSTEME
SYSTÈMES DE PRODUCTION D'ÉNERGIE À PARTIR DE COURANT DE FOND

(30) Priority: 26.05.2016 GB 201609307
(43) Date of publication of application: 10.04.2019
(73) Proprietor: GE Energy (UK) Limited, Altrincham, Cheshire WA14 2DT (GB)
(72) Inventor: HAWTHORNE, Matthew, Bristol Gloucestershire BS1 3AG (GB)
(74) Representative: Openshaw & Co.
(86) International application number: PCT/EP2017/061586
(87) International publication number: WO 2017/202633

(56) References cited:
- GB-A- 2 523 375
- US-A1- 2009 123 283
- US-A1- 2009 302 611
- US-B1- 8 777 555

## Description

The present invention relates to water current power generation systems, and in particular to such systems which employ rotatable power generation units.

### BACKGROUND OF THE INVENTION

It is widely known that easily accessible resources of fossil fuels are declining. In addition, the impact of the use of fossil fuels upon the environment has become increasingly apparent. As a result of this, it has become imperative that viable alternative energy sources are used as effectively and efficiently as possible. The use of turbines to capture the power of water flow, such as tidal, river and ocean current flows is becoming a viable source of alternative energy. The turbine equipment used to capture such water flow energy typically includes a shaft driven generator connected using a drivetrain to a rotor assembly. The rotor assembly includes a plurality of rotor blades that are driven by the water flow, so as to turn an input shaft of the drivetrain.

In order to be economically practical, multiple water current turbine devices need to be deployed in a suitable area. For example, a tidal turbine farm may have tens to hundreds of turbines. The turbines are preferably arranged in an array having multiple rows of multiple turbines. The turbine array could be deployed in a tidal flow area, a river flow, an ocean current, or any other suitable water current area. Although it is preferable for the turbines to be arranged in an array, geography, bathymetry and other factors may mean that a turbine farm has another arrangement.

Such turbine equipment needs to be secured to the bed of a body of water, such as a sea, estuary or river. Conventional underwater turbines used to drive electrical generators are mounted on a horizontal rotational axis and require a significant amount of ancillary features, in order to maximise energy capture. One such feature that is essential for efficient energy generation is yaw capability: it must be possible to direct the turbine to the most effective orientation with respect to the direction of current flow at any particular time.

Installation, maintenance and servicing of underwater power generation apparatus, particularly in deep sea environments, are highly costly and time consuming procedures. It is therefore desirable to simplify the construction and deployment of underwater power generation apparatus, lowering capital cost and reducing the frequency with which in service intervention is required.

Connection systems are used to connect electrical cables, optical cables, hydraulic lines or other flexible cables between first and second end points that are able to rotate with respect to one another. Typically, a flexible cable is carried within a reverse bend radius chain that supports and guides the cable whilst the end points rotate with respect to one another. Such reverse bend radius chains enable rotation of greater than 360 degrees to be achieved. However, such chain based systems are designed to operate in a single plane, and are not able to deal with linear movement of the end points out of that plane of operation. Some example rotary reverse bend radius chains are produced by IGUS GMBH.

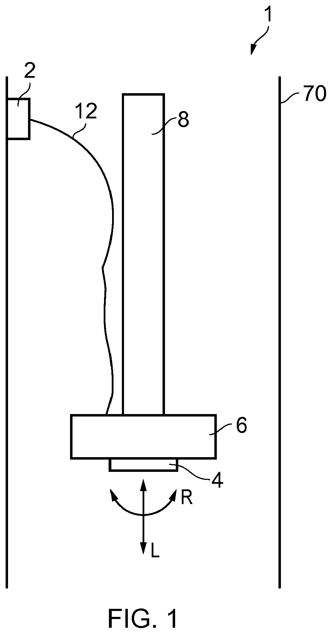

An example of dealing with relative linear movement of the end points is illustrated in Figure 1 of the accompanying drawings. A connector system 1 has a first connector 2 and a second connector 4, and is provided within a housing 10. The second connector 4 is mounted on a connector carrier 6 which itself is mounted on a shaft 8. The shaft 8, and hence connector carrier 6, is mounted for rotational movement R and linear movement L, with respect to the housing and first connector 2. A flexible cable 12 is provided to connect the first connector 2 to the second connector 4. As the shaft 8 moves linearly within the housing 10, the cable 12 curls and uncurls within the housing to enable the connection to be maintained. As the shaft rotates, the cable 12 then curls around the shaft 8. However, such a system is prone to cable snagging, and over bending.

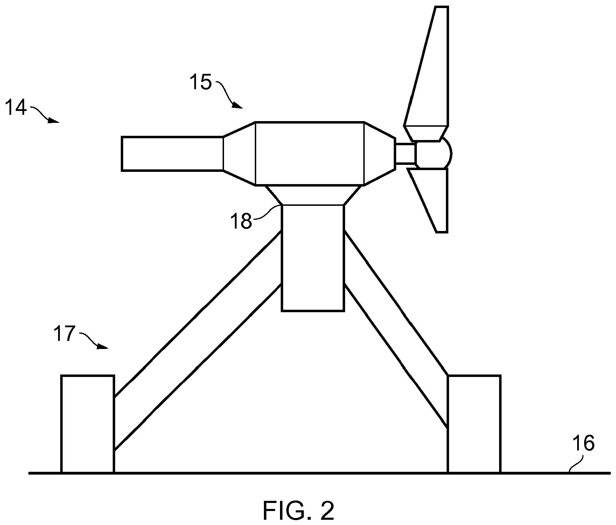

In particular, the system of Figure 1 is not suitable for subsea applications, for example, for a water stream power generating device 14 such as that shown in Figure 2. Such a device 14 comprises a turbine unit 15 mounted on the seabed 16 on a support structure 17. An engagement system 18 is provided that enables the turbine unit 15 to be attached releasably to the support structure 17. In the example shown in Figure 2, the turbine unit 15 is rotatable about a vertical axis with respect to the support structure 17, and so electrical and/or hydraulic and/or control connections between the turbine unit 15 and the support structure 17 must be able to deal with rotation of the turbine unit 15. In addition, the turbine unit 15 is releasably engageable with the support structure 17, such that the unit 15 may be removed along the vertical axis from the support structure 17. The connections between the unit 15 and the support structure 17 can be made after the unit has been located on the support structure. In such a case, the connectors must be able to move axially within the engagement system, whilst maintaining the ability to rotate within the engagement system. In one example, the unit 15 is located on the support structure 17, and the connectors are rotated for polar alignment. The connectors are then moved axially towards the support structure to engage with corresponding connectors therein. The connection system then is able to allow the unit 15 to rotate with respect to the support structure. It will be appreciated that the connector alignment and engagement system may be provided on the support structure, or split appropriately between the support structure 17 and the unit 15. Thus, it is desirable to provide a connection system to enable electrical, hydraulic, optical, control and/or other connections to be made between the turbine unit 15 and the support structure 17, whilst allowing for rotation and linear movement of the connectors within the engagement system.

GB 2,523,375 describes determining the relative angle between a water turbine and the direction of the incident resource. US 2009/302611 describes a marine turbine including a braking means for controlling the speed of rotation of a shaft, and a means to detect the rotational position of the turbine nacelle relative to the base. US 8,777,555 describes a yaw drive for rotating a turbine between a first position associated with tidal flow and a second position associated with tidal ebbs; this includes a slip ring that allows electricity or power to be transmitted through a rotating joint.

### SUMMARY OF THE INVENTION

According to one aspect of the present invention, there is provided a water current power generation system according to the appended claim 1.

In one example, the control system may include sensing means operable to provide an indication of rotation of the second support surface. In another example, the sensing means may include at least one switch operable to indicate when rotation of the second support surface reaches the predetermined amount.

According to a second aspect of the present invention, there is provided a method of controlling a water current power generation system according to the appended claim 4.

### BRIEF DESCRIPTION OF THE DRAWINGS

Figure 1 is a schematic view of a connection system;
Figure 2 illustrates a subsea electricity generating device;
Figure 3 illustrates a side cross-sectional view of an improved connection system;
Figure 4 is a plan view of the system of Figure 3;
Figure 5 illustrates an operating range of rotation of the system of Figures 3 and 4;
Figure 6 is a plan view of the system of Figures 3 and 4 modified according to an aspect of the present invention;
Figure 7 illustrates a control system embodying another aspect of the present invention for use with the system of Figure 6;
Figure 8 illustrates an actuation control system; and
Figures 9 and 10 illustrate a flow chart of a method embodying another aspect of the present invention.

### DETAILED DESCRIPTION OF THE PREFERRED EMBODIMENTS

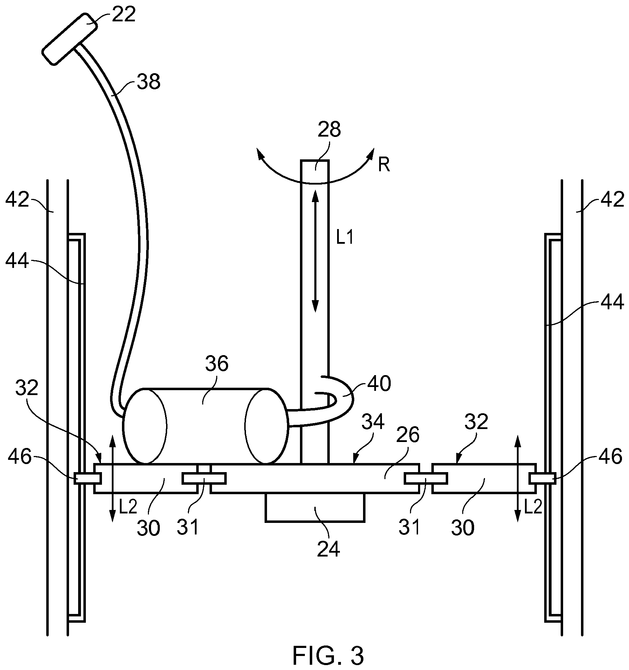

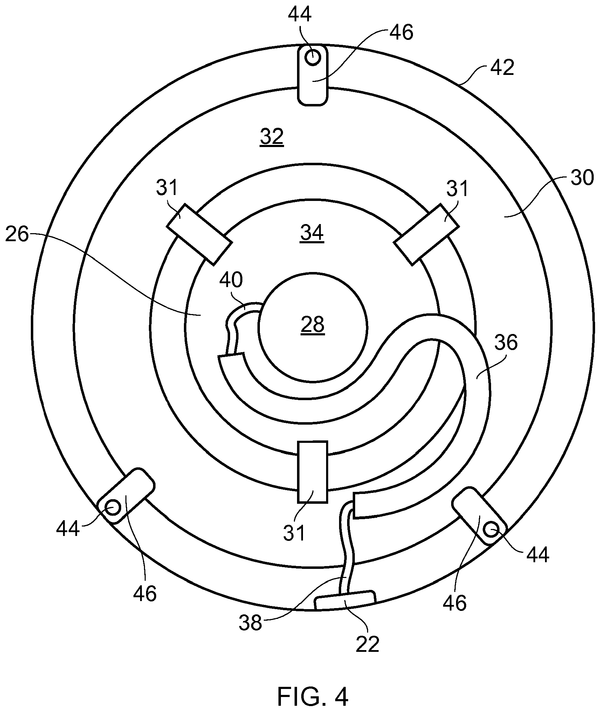

Figure 3 illustrates, in side view, an improved connection system 2, and Figure 4 illustrates the system of Figure 3 in plan view. The connection system 20 comprises a first connection point 22 and a second connection point 24. The second connection point 24 is arranged for rotational movement R and linear movement L1 with respect to the first connection point 22. The second connection point 24 is carried on a connector carrier 26 which itself is mounted on a shaft 28. The shaft 28 is mounted (details of the mounting not shown for clarity) within a housing 42. The housing 42 may be provided by a specific connection system housing, or by a portion of the equipment to which the connection system is applied.

The first and second connection points 22 and 24 may provide electrical, hydraulic, control or other functional connections, or may simply provide fixing points or other points of reference for the cable being routed through the connection system. It will be readily appreciated that any appropriate number of connection points may be provided of any appropriate type.

In the example shown in Figures 3 and 4, the connector carrier 26 is provided by a circular, or near circular disc having a first surface on which the second connection point 24 is mounted.

A cable carrier 30 is arranged between an outer edge of the connector carrier 26 and the inner surface of the housing 42, and in the example shown in Figures 3 and 4 is provided by a circular annular member. The cable carrier is attached to the connector carrier 26 by way of attachment portions 31. In Figure 4, three attachment portions 31 are shown, but it will be appreciated that any particular number of attachment portions 31 may be provided. The attachment portions 31 ensure that the cable carrier 30 is able to move in a linear direction L2 as the connector carrier 26 moves in a linear direction L1. The attachment portions 31 also allow the connector carrier 26 to rotate with respect to the cable carrier 30. Hence the connector carrier 26 is able to rotate with respect to the housing 42, while the cable carrier 30 does not rotate with respect to the housing 42.

The cable carrier 30 is restrained from such rotational movement by a number of guide rails 44 which extend along the inner surface of the housing 42. Guide members 46 attach the cable carrier 30 to the guide rails 44, so that the cable carrier is able to move linearly within the housing 42, but is prevented from rotating within the housing 42. Once again, three guide rails and associated guide members are shown in Figures 3 and 4, but it will be readily appreciated that any appropriate number of guide rails and guide members may be provided. It will also be appreciated that any appropriate means for preventing rotation of the cable carrier may be provided.

The provision of the connector carrier and separate cable carrier 30, enables the cable carrier 30 to move linearly with the connector carrier 26, whilst allowing the connector carrier 26 to rotate with respect to the cable carrier 30.

The connector carrier 26 provides a first support surface and a second support surface 34. The cable carrier 30 provides a first support surface 32 and the connector carrier 26 provides a second support surface 34. A reverse bend radius chain 36 in which at least one cable is routed, is located on the first and second support surfaces 34 and 32. The cable routed through the chain 36 is connected to the first connection point 22 by way of a first connecting cable 38, and to the second connection point 24 by way of a second connecting cable 40. A reverse bend radius chain 36 enables the connection between the first and second connection points 22 and 24 to be maintained as the connector carrier 26 rotates with respect to the housing 42 and first connection point 22.

For example, the connector carrier 26 may be driven to rotate with respect to the housing by a suitable drive mechanism. Alternatively, it may be the housing that rotates with respect to the connector carrier 26, for example when the turbine unit is rotated on the support structure.

The provision of the cable carrier 30 with its first support surface 32, on which another portion of the reverse bend radius chain 36 is supported, means that friction of movement of the chain 36 is reduced. This is the case because the chain 36 has most of its length stationary with respect to its support surface, whether that be the first surface 32 or the second surface 34, and has only a small portion of its length in transition between the two surfaces, as the first support surface 32 rotates with respect to the second support surface 34.

The cable carrier 30, which does not rotate with respect to the housing 42 or first connection point 22, enables the first connection cable 38 to remain static rotationally, thereby preventing this cable from being entangled. Similarly, the inner end of the chain 36, which is supported on the second support surface 34 of the connector carrier 26, is stationary with respect to the carrier 36 and second connection point 24, such that the second connecting cable 40 does not translate or rotate, thereby preventing this cable from tangling.

In such a manner, the connector carrier 26 is able to rotate by more than 360° with respect to the housing and first connection point 22, and the whole assembly is able to translate within the housing 42.

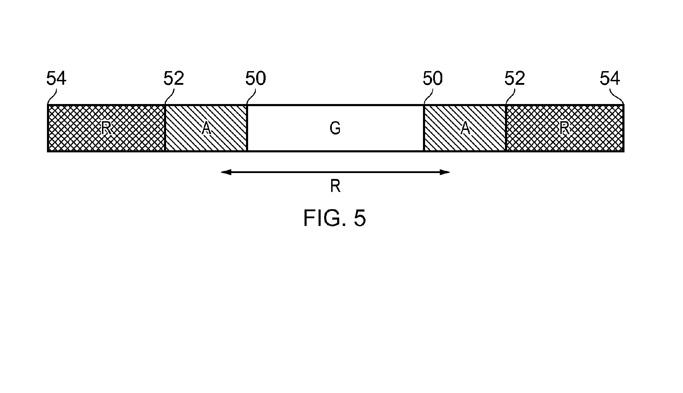

Figure 5 illustrates an operating range of rotation for the system of Figures 3 and 4. Rotation of the connection carrier 26 and shaft 28 with respect to the cable carrier 30 is illustrated by arrow R. A normal operating region, or "green zone", is defined in which the relative rotation is within a desired range. In the green zone G (50-50), the cable 36 is not placed under undesirably high tension or strain. Over rotation can cause damage or breakage of the cable 36, as replacement or repair of the cable 36 is expensive and time consuming is to be avoided. As the rotation moves out of the green zone G, a detector (not shown for clarity) provides a control signal indicative of the fact that rotation has moved out of the green zone G (50) into an undesirable, or "amber", zone A (50-52). When in this amber zone A, the cable 36 is under increased tension, but it is still possible to recover from this position to the green zone G. When rotation into this amber zone A is detected, the control system will undertake a recovery operation in order to return the rotation to the green zone G. However, in the event of failure of all or part of the control system, it is possible that the rotation will continue to increase into an unrecoverable zone, a so-called "red zone" R (52-54). If the rotation is in this red zone R, then damage is likely to occur to the cable 36.

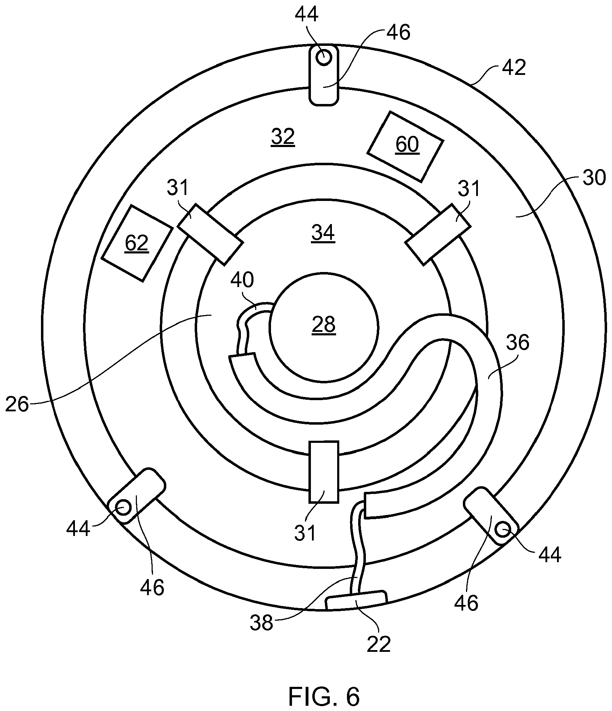

Accordingly, in accordance with one aspect of the present invention, the system of Figures 3 and 4 is modified as shown in Figure 6. The system of Figure 6 is identical to that of Figures 3 and 4, with the exception of the addition of first and second extremity switches 60 and 62. The first and second extremity switches 60 and 62 are mechanical switches which are positioned to be engaged by the cable 36 when the cable 36 reaches the transition between the amber A and red zones R (52 in Figure 5). As will be explained in more detail below, these switches 60 and 62 act as inputs to an emergency control system in the event that other control systems fail so that excessive rotation can be prevented, thereby reducing the likelihood of damage to the cable 36 and other components.

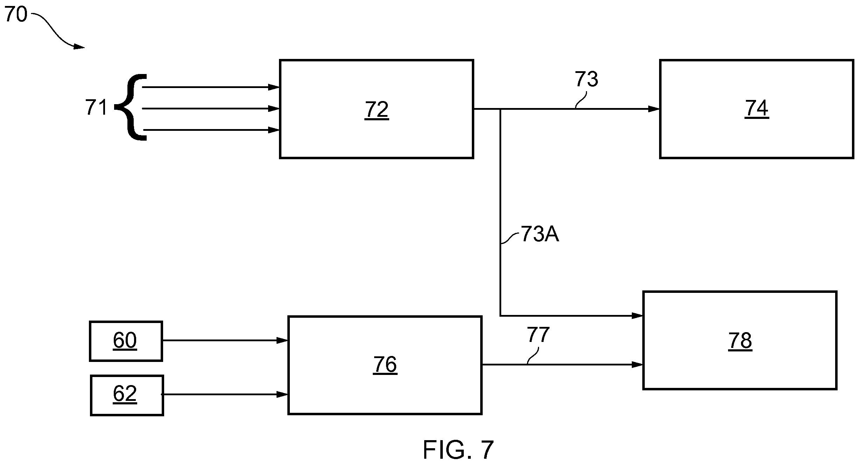

A control system 70 embodying another aspect of the present invention is illustrated in block diagram form in Figure 7. The control system 70 includes a system controller 72 which is operable to control overall operation of the turbine unit, in response to reception of control inputs 71. Normal operation of the system will not be described here for the sake of clarity, but it will be readily understood that such measurement and control inputs 71 will include operating measurements such as power output, rotor speed and the like, and control inputs will include items such as desired power output.

The system controller 72 operates to produce control signals 73 for supply to systems of the turbine unit, represented in Figure 7 by block 74. It will be appreciated that the controlled systems 74 may include a generator, turbine blade pitch system, and other components of the turbine unit. Parameters that may be controlled include generator torque, rotor speed etc.. The actual control scheme for the normal operation of the turbine unit will not be included here for the sake of clarity and brevity.

The system controller 72 also supplies a signal to a connector actuation system 78 which is operable to move the connector carrier 26 so as to engage and disengage the connectors 24 of the turbine unit 15 (Figure 2) with corresponding connectors of the support structure 17 (Figure 2). In normal use, the connectors 26 are engaged upon location of the turbine unit 15 on the support structure 17, and are disengaged when the turbine unit 15 is removed from the support structure 17.

Whilst engaged with the support structure connectors, the connectors 24 and the connection carrier 26 are fixed with respect to the support structure. As the turbine unit rotates with respect to the support structure, the cable 36 enables a connection to be maintained between the turbine unit and the connectors on the support structure.

There are conditions in which it is necessary to disengage the connectors 26 of the turbine 15 from the connectors of the support structure 17 in order to prevent damage occurring to the cable 36 or to other components. Such damage may be caused by over rotation of the turbine unit 15 with respect to the support structure 17. Such over rotation may occur through failure of one or more components of the turbine unit.

In order to prevent such damage occurring, a control system embodying an aspect of the present invention is provided with an emergency control system 76. The emergency control system 76 is connected to receive control inputs from the first and second switches 60 and 62, and is operable to output a control signal 77 to the connector actuation system 78. The emergency control system 76 is preferably functionally separate from the system controller 72, and is preferably physically separate from the system controller 72. Such separation serves to ensure that the emergency control system 76 is not affected by any fault issues associated with the system controller 72.

The first and second switches 60 and 62 are actuated by engagement with the cable 36, at respective rotational positions of the turbine unit with respect to the connection carrier 26. As the rotational position of the turbine unit reaches either end of the amber zone A (Figure 6), the cable 36 engages with one of the first and second switches 60 and 62, causing a signal to be input to the emergency control system. Upon receipt of such a signal, the emergency control system undertakes an emergency retract operation to disengage the connectors 24 from those of the support structure. Disengagement allow the turbine unit to rotate with respect to the support structure without increasing tension and loading on the cable 36.

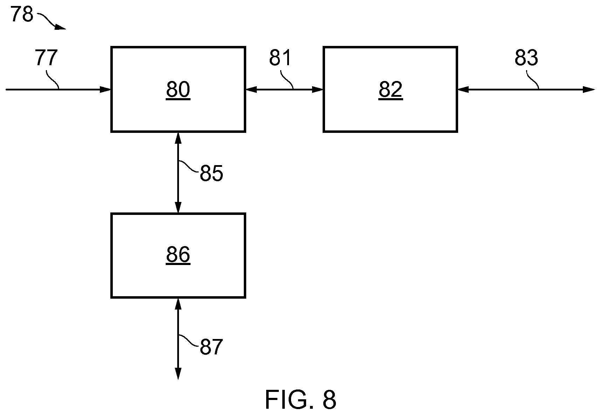

Figure 8 illustrates one example of a connector actuation system 78, which comprises a processor 80, a communications device 82 and an actuator drive unit 86. The processor is operable to receive the emergency actuation control signal 77 from the emergency control system 76.

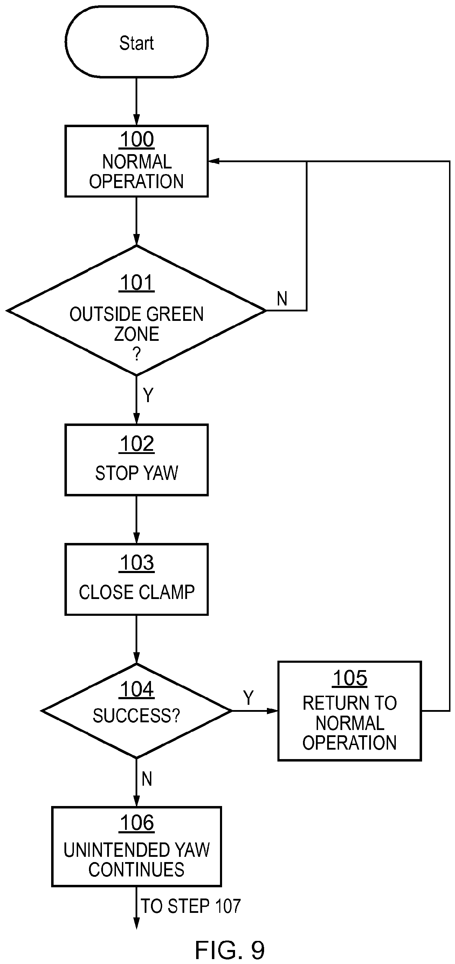

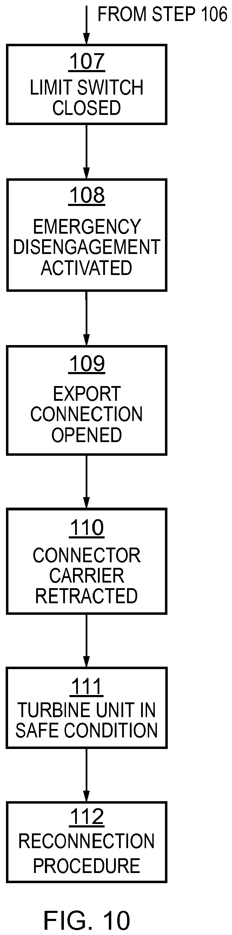

Operation of the control systems of Figure 7 and 8 will now be described with reference to those Figures, and to the flowchart of Figures 9 and 10. Step 100 represents normal operation of the turbine unit, and step 101 determines that normal operation, that is, within the green zone, is continuing. If the rotation of the turbine unit exceeds the green zone range, and moves into the amber zone, then the system controller 72 operates to stop the rotation (yaw) (step 102) of the turbine unit, primarily by operating the turbine clamp to prevent further rotation (step 103). If it is determined (step 104) that the clamp has closed successfully, then the turbine may be returned to normal operation (step 105).

However, if there has been a failure of a component, for example the clamp or the control system, then the turbine unit will continue to yaw in an uncontrolled manner (step 106). In that case, in order to prevent damage to the cable 36 and other components, when the rotation reaches an extent of the predetermined amber zone, the cable 36 engages with one of the first and second switches 60 and 62, thereby closing the switch concerned (step 107). Such engagement causes an extent signal to be sent to the emergency control system 76. Receipt of this signal activates an emergency disengagement action (step 108).

The emergency control system 76 initiates a disengagement signal 77 which is sent to the connection actuation system 78, and to the processor 80 in particular. The processor 80 takes action, upon receipt of the disengagement signal 77, to disconnect the power export connection (step 109) from the power grid. This disconnection is required before disengagement of the connectors 24, since the connectors 24 are not designed to be disengaged whilst the connection is powered.

The disconnection from the power grid may take place locally in the support structure, or may require communications with a shore based or subsea hub. In the latter case, the processor 80 instructs the communications unit 82, using a control signal 81, to communicate with the hub. In response to receipt of such a control signal 81, the communications unit 82 communicates with the hub over a communications link 83. Upon confirmation of disconnection of the power grid connection by the hub, the communications unit issues a confirmation signal to the processor 80.

Following the disconnection of the power grid conncction, the processor 80 issues a retract instruction 85 to the actuator drive unit 86 (step 110). The actuator drive unit 86 uses a control signal 87 in order to control an actuator that retracts the connector carrier 36 and the connectors 24. Thus, the connectors are disengaged from the support structure, and the turbine unit is now free to rotate without the risk of damage to the cable 36. The turbine unit is now considered to be in a safe state, since the risk of damage has been significantly reduced (step 111).

Following appropriate investigations and/or maintenance, the turbine unit undergoes a reconnection procedure, possibly using a remotely operated vehicle (ROV) (step 112). Alternatively, the turbine unit may be recovered for repair or maintenance.

## Claims

1. A water current power generation system comprising:
a support structure (17) for location on the bed of a body of water;
a power generating unit (14) adapted for mounting on the support structure (17), the power generating unit (14) being adapted for rotation with respect to the support structure (17);
a connection system (1) arranged to provide at least one electrical connection between equipment of the support structure (17) and equipment of the power generating unit (14); and
a control system (70) operable to monitor rotation of the power generating unit (14) on the support structure (17), and to disengage said at least one electrical connection when rotation of the power generating unit (14) on the support structure (17) reaches a predetermined value,
**characterised in that** the connection system (1) comprises:
a first connection point (22); a first support surface moveable linearly with respect to the first connection point (22);
a second support surface (34) moveable linearly and rotationally with respect to the first connection point (22);
a second connection point (24) moveable linearly and rotationally with respect to the first connection point (22), and moveable rotationally with respect to the first support surface, and fixed with respect to the second support surface (34); and
a reverse bend radius cable chain (36) located on the first and second support surfaces, and having a first end connected with the first connection point (22) via a first connector cable, and a second end connected with the second connection point (24) via a second connector cable, wherein the connection system (1) is mounted on one of the support structure (17) and power generating unit (14), the second support surface (34) providing an electrical connection therefor, a second electrical connection being provided on the other of the support structure (17) and power generating unit (14), and wherein the connection system (1) has a first position in which the electrical connectors are engaged with one another, and a second position in which the electrical connectors are disengaged from one another,
wherein the control system (70) operable to monitor rotation of the second support surface (34) of the connection system (1) and to initiate movement of the connection system (1) from the first position to the second position when rotation of the second support surface (34) reaches a predetermined amount.

2. A system as claimed in claim 1, wherein the control system (70) includes sensing means operable to provide an indication of rotation of the second support surface (34).

3. A system as claimed in claim 2, wherein the sensing mean includes at least one switch (60) operable to indicate when rotation of the second support surface (34) reaches the predetermined amount.

4. A method of controlling a water current power generation system comprising a support structure (17) for location on the bed of a body of water, a power generating unit (14) adapted for mounting on the support structure (17), the power generating unit (14) being adapted for rotation with respect to the support structure (17), a connection system (1) arranged to provide at least one electrical connection between equipment of the support structure (17) and equipment of the power generating unit (14), and a control system (70) operable to monitor rotation of the power generating unit (14) on the support structure (17), and to disengage said at least one electrical connection when rotation of the power generating unit (14) on the support structure (17) reaches a predetermined value, the method comprising:
monitoring rotation of the second support surface (34); and
disengaging the at least one electrical connections when rotation of the second support surface (34) reaches a predetermined amount, **characterised in that** the connection system (1) comprises a first connection point (22), a first support surface moveable linearly with respect to the first connection point (22), a second support surface (34) moveable linearly and rotationally with respect to the first connection point (22), the second support surface (34), a second connection point (24) moveable linearly and rotationally with respect to the first connection point (22), and moveable rotationally with respect to the first support surface, and fixed with respect to the second support surface (34), and a reverse bend radius cable chain (36) located on the first and second support surfaces, and having a first end connected with the first connection point (22) via a first connector cable, and a second end connected with the second connection point (24) via a second connector cable, wherein the connection system (1) is mounted on one of the support structure (17) and power generating unit (14), the second support surface (34) providing an electrical connection therefor, a second electrical connection being provided on the other of the support structure (17) and power generating unit (14), and wherein the connection system (1) has a first position in which the electrical connectors are engaged with one another, and a second position in which the electrical connectors are disengaged from one another.

## Patentansprüche

1. System zur Erzeugung von Strom aus Wasserströmung, umfassend:
eine Tragstruktur (17) zur Anordnung in einem Bett eines Wasserkörpers;
eine Stromerzeugungseinheit (14), die zur Anbringung auf der Tragstruktur (17) geeignet ist, wobei die Stromerzeugungseinheit (14) zur Drehung in Bezug auf die Tragstruktur (17) geeignet ist;
ein Verbindungssystem (1), das so ausgelegt ist, dass es mindestens eine elektrische Verbindung zwischen der Ausstattung der Tragstruktur (17) und der Ausstattung der Stromerzeugungseinheit (14) bereitstellt; und
ein Steuersystem (70), das betätigt werden kann, um die Drehung der Stromerzeugungseinheit (14) auf der Tragstruktur (17) zu überwachen und die mindestens eine elektrische Verbindung zu lösen, wenn die Drehung der Stromerzeugungseinheit (14) auf der Tragstruktur (17) einen vorbestimmten Wert erreicht, **dadurch gekennzeichnet, dass** das Verbindungssystem (1) Folgendes umfasst:
einen ersten Verbindungspunkt (22);
eine erste Tragfläche, die in Bezug auf den ersten Verbindungspunkt (22) linear beweglich ist;
eine zweite Tragfläche (34), die in Bezug auf den ersten Verbindungspunkt (22) linear und drehbar beweglich ist;
einen zweiten Verbindungspunkt (24), der in Bezug auf den ersten Verbindungspunkt (22) linear und drehbar beweglich ist, und in Bezug auf die erste Tragfläche drehbar beweglich ist und in Bezug auf die zweite Tragfläche (34) fest ist; und
eine Kabelkette mit umgekehrtem Biegeradius (36), die an der ersten und der zweiten Tragfläche angeordnet ist und ein erstes Ende aufweist, das über ein erstes Verbindungskabel mit dem ersten Verbindungspunkt (22) verbunden ist, und ein zweites Ende, das über ein zweites Verbindungskabel mit dem zweiten Verbindungspunkt (24) verbunden ist, wobei das Verbindungssystem (1) an der Tragstruktur (17) oder der Stromerzeugungseinheit (14) angebracht ist, wobei die zweite Tragfläche (34) eine elektrische Verbindung dafür bereitstellt, wobei eine zweite elektrische Verbindung an der anderen der Tragstruktur (17) oder der Stromerzeugungseinheit (14) bereitgestellt wird, und wobei das Verbindungssystem (1) eine erste Position hat, in der die elektrischen Verbinder miteinander in Eingriff stehen, und eine zweite Position, in der die elektrischen Verbinder voneinander gelöst sind, wobei das Steuersystem (70) betätigt werden kann, um die Drehung der zweiten Tragfläche (34) des Verbindungssystems (1) zu überwachen und eine Bewegung des Verbindungssystems (1) von der ersten Position zu der zweiten Position einzuleiten, wenn die Drehung der zweiten Tragfläche (34) ein vorbestimmtes Maß erreicht.

2. System nach Anspruch 1, wobei das Steuersystem (70) Erfassungsmittel enthält, die betätigt werden können, um eine Anzeige der Drehung der zweiten Tragfläche (34) bereitzustellen.

3. System nach Anspruch 2, wobei das Erfassungsmittel mindestens einen Schalter (60) enthält, der betätigt werden kann, um anzuzeigen, wenn die Drehung der zweiten Tragfläche (34) das vorbestimmte Maß erreicht.

4. Verfahren zum Steuern eines Systems zur Erzeugung von Strom aus Wasserströmung, das eine Tragstruktur (17) zur Anordnung in einem Bett eines Wasserkörpers, eine Stromerzeugungseinheit (14), die zur Anbringung auf der Tragstruktur (17) geeignet ist, wobei die Stromerzeugungseinheit (14) zur Drehung in Bezug auf die Tragstruktur (17) geeignet ist, ein Verbindungssystem (1), das so ausgelegt ist, dass es mindestens eine elektrische Verbindung zwischen der Ausstattung der Tragstruktur (17) und der Ausstattung der Stromerzeugungseinheit (14) bereitstellt, und ein Steuersystem (70) umfasst, das so betätigt werden kann, dass es die Drehung der Stromerzeugungseinheit (14) auf der Tragstruktur (17) überwacht und die mindestens eine elektrische Verbindung trennt, wenn die Drehung der Stromerzeugungseinheit (14) auf der Tragstruktur (17) ein vorbestimmtes Maß erreicht, wobei das Verfahren umfasst:
Überwachen der Drehung der zweiten Tragfläche (34); und
Lösen der mindestens einen elektrischen Verbindung, wenn die Drehung der zweiten Tragfläche (34) ein vorbestimmtes Maß erreicht, **dadurch gekennzeichnet, dass** das Verbindungssystem (1) einen ersten Verbindungspunkt (22), eine erste Tragfläche, die in Bezug auf den ersten Verbindungspunkt (22) linear beweglich ist, eine zweite Tragfläche (34), die in Bezug auf den ersten Verbindungspunkt (22) linear und drehbar beweglich ist, die zweite Tragfläche (34), einen zweiten Verbindungspunkt (24), der in Bezug auf den ersten Verbindungspunkt (22) linear und drehbar beweglich ist, und in Bezug auf die erste Tragfläche drehbar beweglich und in Bezug auf die zweite Tragfläche (34) fest ist, und eine Kabelkette mit umgekehrtem Biegeradius (36), die auf der ersten und zweiten Tragfläche angeordnet ist und ein erstes Ende hat, das mit dem ersten Verbindungspunkt (22) über ein erstes Verbindungskabel verbunden ist, und ein zweites Ende hat, das mit dem zweiten Verbindungspunkt (24) über ein zweites Verbindungskabel verbunden ist, umfasst, wobei das Verbindungssystem (1) an einer von der Tragstruktur (17) und der Stromerzeugungseinheit (14) angebracht ist, wobei die zweite Tragfläche (34) einen elektrischen Anschluss dafür bereitstellt, wobei eine zweite elektrische Verbindung an dem anderen der Tragstruktur (17) und der Stromerzeugungseinheit (14) bereitgestellt wird, und wobei das Verbindungssystem (1) eine erste Position aufweist, in der die elektrischen Verbinder miteinander in Eingriff stehen, und eine zweite Position, in der die elektrischen Verbinder voneinander gelöst sind.

## Revendications

1. Système de production d'énergie par courant d'eau comprenant :
une structure de soutien (17), à placer sur le lit d'un plan d'eau ;
une unité de production d'énergie (14), conçue pour être montée sur la structure de soutien (17), l'unité de production d'énergie (14) étant conçue pour tourner par rapport à la structure de soutien (17) ;
un système de connexion (1), agencé pour fournir au moins une connexion électrique entre l'équipement de la structure de soutien (17) et l'équipement de l'unité de production d'énergie (14) ; et
un système de commande (70), pouvant servir à surveiller la rotation de l'unité de production d'énergie (14) sur la structure de soutien (17) et à faire séparer ladite au moins une connexion électrique lorsque la rotation de l'unité de production d'énergie (14) sur la structure de soutien (17) atteint une valeur prédéterminée,
**caractérisé en ce que** le système de connexion (1) comprend :
un premier point de connexion (22) ; une première surface de soutien, mobile linéairement par rapport au premier point de connexion (22) ;
une seconde surface de soutien (34), mobile linéairement et en rotation par rapport au premier point de connexion (22) ;
un second point de connexion (24), mobile linéairement et en rotation par rapport au premier point de connexion (22) et mobile en rotation par rapport à la première surface de soutien, et fixe par rapport à la seconde surface de soutien (34) ; et
une chaîne de câbles à rayon de courbure inversé (36), située sur les première et seconde surfaces de soutien et dont une première extrémité est connectée au premier point de connexion (22) par l'intermédiaire d'un premier câble de connecteur, et dont une seconde extrémité est connectée au second point de connexion (24) par l'intermédiaire d'un second câble de connecteur, le système de connexion (1) étant monté sur la structure de soutien (17) ou sur l'unité de production d'énergie (14), la seconde surface de soutien (34) assurant une connexion électrique à cet effet, une seconde connexion électrique étant prévue sur l'autre entité parmi la structure de soutien (17) et l'unité de production d'énergie (14) et le système de connexion (1) adoptant une première position, dans laquelle les connecteurs électriques sont en prise les uns avec les autres, et une seconde position, dans laquelle les connecteurs électriques sont séparés les uns des autres,
le système de commande (70) pouvant servir à surveiller la rotation de la seconde surface de soutien (34) du système de connexion (1) et à lancer le mouvement du système de connexion (1) de la première position à la seconde position lorsque la rotation de la seconde surface de soutien (34) atteint une valeur prédéterminée.

2. Système selon la revendication 1, dans lequel le système de commande (70) comprend un moyen de détection pouvant servir à fournir une indication de rotation de la seconde surface de soutien (34).

3. Système selon la revendication 2, dans lequel le moyen de détection comprend au moins un commutateur (60) pouvant servir à indiquer quand la rotation de la seconde surface de soutien (34) atteint le degré prédéterminé.

4. Procédé de commande d'un système de production d'électricité par courant d'eau comprenant une structure de soutien (17) à placer sur le lit d'un plan d'eau, une unité de production d'énergie (14) conçue pour être montée sur la structure de soutien (17), l'unité de production d'énergie (14) étant conçue pour tourner par rapport à la structure de soutien (17), un système de connexion (1), agencé pour fournir au moins une connexion électrique entre l'équipement de la structure de soutien (17) et l'équipement de l'unité de production d'énergie (14), et un système de commande (70) pouvant servir à surveiller la rotation de l'unité de production d'énergie (14) sur la structure de soutien (17) et à faire séparer ladite au moins une connexion électrique lorsque la rotation de l'unité de production d'énergie (14) sur la structure de soutien (17) atteint une valeur prédéterminée, le procédé comprenant :
la surveillance de la rotation de la seconde surface de soutien (34) ; et
la séparation d'au moins une connexion électrique lorsque la rotation de la seconde surface de soutien (34) atteint une valeur prédéterminée, **caractérisé en ce que** le système de connexion (1) comprend un premier point de connexion (22), une première surface de soutien mobile linéairement par rapport au premier point de connexion (22), une seconde surface de soutien (34) mobile linéairement et en rotation par rapport au premier point de connexion (22), la seconde surface de soutien (34), un second point de connexion (24), mobile linéairement et en rotation par rapport au premier point de connexion (22) et mobile en rotation par rapport à la première surface de soutien, et fixe par rapport à la seconde surface de soutien (34), et une chaîne de câbles à rayon de courbure inversé (36), située sur les première et seconde surfaces de soutien, et comportant une première extrémité, connectée au premier point de connexion (22) par l'intermédiaire d'un premier câble de connecteur, et une seconde extrémité, connectée au second point de connexion (24) par l'intermédiaire d'un second câble de connecteur, le système de connexion (1) étant monté sur la structure de soutien (17) et sur l'unité de production d'énergie (14), la seconde surface de soutien (34) assurant une connexion électrique à cet effet, une seconde connexion électrique étant prévue sur l'autre entité parmi la structure de soutien (17) et l'unité de production d'énergie (14) et le système de connexion (1) adoptant une première position, dans laquelle les connecteurs électriques sont engagés les uns avec les autres, et une seconde position, dans laquelle les connecteurs électriques sont séparés les uns des autres.
